# EUROPÄISCHE PATENTSCHRIFT

(11) **EP 3 231 536 B1**
(45) Veröffentlichungstag und Bekanntmachung des Hinweises auf die Patenterteilung: **31.01.2018**
(21) Anmeldenummer: 16165222.7
(22) Anmeldetag: 14.04.2016
(51) Int. Cl.: B22F 1/00, B22F 3/10, C22F 1/02, C22F 1/18, C22C 1/04

(54) **VERFAHREN ZUR PULVERMETALLURGISCHEN HERSTELLUNG VON BAUTEILEN AUS TITAN ODER TITANLEGIERUNGEN**
METHOD FOR PRODUCING COMPONENTS FROM TITANIUM OR TITANIUM ALLOYS WITH POWDER METALLURGY
PROCEDE DE PRODUCTION METALLURGIE PULVERULENTE DE COMPOSANTS EN TITANE OU EN ALLIAGE DE TITANE

(43) Veröffentlichungstag der Anmeldung: 18.10.2017
(73) Patentinhaber: Element 22 GmbH, 24128 Kiel (DE)
(72) Erfinder: VIEHÖFER, Ulf, 24118 Kiel (DE); WINKELMÜLLER, Wendelin, 24106 Kiel (DE); LANG, Markus, 24145 Kiel (DE); SCHARVOGEL, Matthias, 20253 Hamburg (DE)
(74) Vertreter: Raffay & Fleck

(56) Entgegenhaltungen:
- WO-A1-2012/148471
- GB-A- 818 827
- US-A- 5 441 695

## Beschreibung

Die vorliegende Erfindung betrifft ein Verfahren zur pulvermetallurgischen Herstellung eines Bauteils aus Titan oder einer Titanlegierung, wobei zunächst unter Verwendung von aus Titan oder der Titanlegierung gebildetem Metallpulver ein Grünteil geformt und dieses in einem nachfolgenden Sinterschritt verdichtet und verfestigt wird.

Es sind verschiedene pulvermetallurgische Verfahren zur Herstellung maßgetreuer Titanbauteile (mit "Titanbauteil" werden hier und nachfolgend vereinfachend Bauteile bezeichnet, die aus Titan (Reintitan) oder einer oder auch mehreren Titanlegierungen gebildet sind) bekannt, wobei in allen Verfahren zunächst ein Grünteil hergestellt und dieses in einem Sinterprozess verdichtet und verfestigt wird. Die Herstellung des Grünteils kann auf unterschiedliche Weise erfolgen, insbesondere mittels additiver Fertigungsverfahren, Metallpulverspritzguss, Extrusionsverfahren und druckloser pulvermetallurgischer Fertigungsverfahren.

Die pulvermetallurgische Herstellung von Titanbauteilen gewinnt aufgrund der exzellenten Eigenschaften des Werkstoffs Titan gepaart mit der wirtschaftlichen und ökonomischen Herstellungsweise zunehmend an Bedeutung. Die gute Biokompatibilität und die hohe spezifische Festigkeit des Werkstoffs Titan spielen insbesondere in den Anwendungsbereichen der Medizintechnik und der Luft- und Raumfahrt eine bedeutende Rolle. Die wirtschaftlich wichtigste Legierung mit Absatzzahlen von über 50% des gesamten Titanmarktes ist Ti6Al4V.

Zur Herstellung eines pulvermetallurgisch prozessierten Titanbauteils müssen in der Regel folgende Schritte durchgeführt werden:
a) Formgebung
b) Entbinderung
c) Sintern

Ziel der Formgebung ist es, die Titan-Pulverpartikel in einer möglichst dichten Packung in endkonturnahe Form zu bringen. In diesem Schritt werden abhängig vom verwendeten Verfahren Additive benutzt, welche in einem oder mehreren anschließenden Entbinderungsschritt(en) entfernt werden müssen. Im anschließenden, häufig auch finalen, Prozessschritt, dem Sintern, werden die Pulverpartikel durch Materialtransport konsolidiert.

Aufgrund der hohen Reaktivität von Titan müssen alle Verarbeitungsschritte unter speziell angepassten Prozessbedingungen ablaufen. In der Patentschrift EP 1 119 429 B1 [1] beschreiben Gerling et al. notwendige Prozessbedingungen zum Sintern von Titanbauteilen. Die kombinierte Umsetzung der Entbinderung und Sinterung in einem gemeinsamen Ofenkonzept wird durch Blüm in der EP 1 496 325 A2 [2] beschrieben.

Titan weist zwei Kristallmodifikationen auf. Die hexagonale α-Phase, welche bei Reintitan und Normaldruck bis zu einer Temperatur bis zu 882,5°C vorliegt, und die kubisch raumzentrierte β-Phase, welche bei Reintitan und Normaldruck oberhalb der vorstehend bezeichneten Temperatur auftritt. Die Präsenz der verschiedenen Phasen bei Raumtemperatur wird verwendet, um Titanlegierungen in α-Ti, (α+β)-Ti und β-Ti Legierungen einzuteilen. Ti6Al4V ist beispielsweise eine (α+β)-Legierung, d.h. dass bei Raumtemperatur beide Phasen im Gefüge stabil vorliegen. Um im Sinterprozess von Titan und Titanlegierungen Bauteile mit einer klassischerweise angestrebten Dichte >97% herzustellen, werden üblicherweise Sintertemperaturen von ca. 1100-1400°C bei einer Sinterdauer von circa 2-5 Stunden benötigt. Für Reintitan und Ti6Al4V bedeutet dies, dass die Materialien im β-Phasengebiet prozessiert werden, welches zu einem massiven β-Kornwachstum führt.

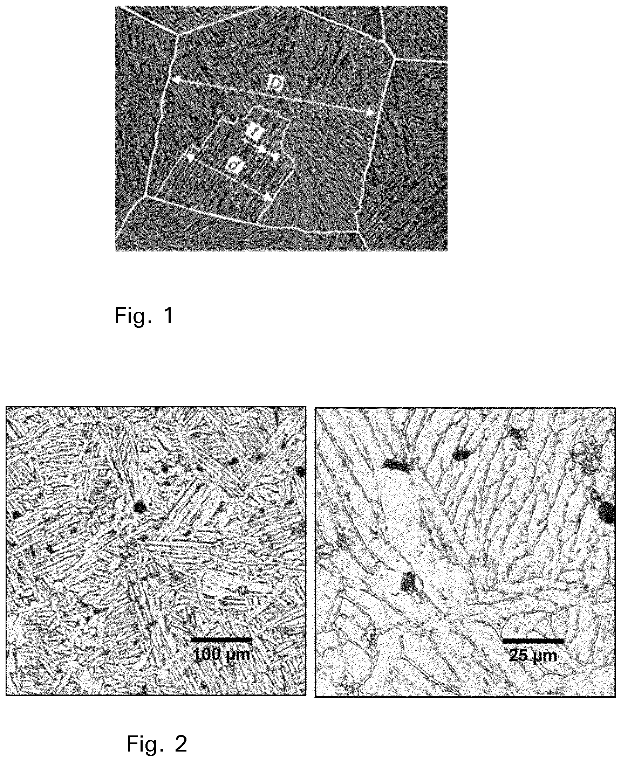

In der EP 1 119 429 B1 [1] beschreiben Gerling et al., dass das sich einstellende Gefüge eine β-Korngröße von ca. 150 *µ*m aufweist. Zur Beschreibung der Größen der verschiedenen Strukturen im lamellaren (α+β)-Gefüge wird hier die in Fig. 1 dargestellte Nomenklatur nach Sieniawski et al. [3] verwendet. Darin bezeichnen:
D: die primäre β-Phasen Korngröße
d: die Größe einer parallelen α-Lamellen Kolonie
t: die Breite einer α-Lamelle

Im Unterschied zu Umformprozessen findet auf der pulvermetallurgischen Route die Formgebung als erster Prozessschritt statt. Im anschließenden Prozessschritt, dem Sintern, entsteht das zuvor bereits in Form gebrachte, dichte Titanbauteil. Im Gegensatz zu klassischen Verarbeitungsansätzen besteht aufgrund der inversen Abfolge der Prozessschritte (1. Formgebung, 2. Materialkonsolidierung) bei dem pulvermetallurgischen Ansatz nicht die Möglichkeit das Gefüge des Metalls und damit dessen Materialeigenschaften durch thermische/mechanische Bearbeitung vor dem Formgebungsschritt zu verfeinern bzw. zu optimieren. Für pulvermetallurgische Verfahren zum Herstellen von Bauteilen aus Titan und/oder Titanlegierungen stellt gerade die prozessbedingte inverse Abfolge kombiniert mit dem sehr beschränkten Einfluss auf das sich im bekannten Sinterprozess einstellende Gefüge einen limitierenden Faktor dar. Zur Veranschaulichung ist ein sich standardmäßige einstellendes Gefüge einer mit im Stand der Technik üblicherweise verwendeten Titanpulvern (mit Pulverpartikeln mit Größen ≤ 45 *µ*m) und unter im Stand der Technik typischerweise eingesetzten Sinterbedingungen gesinterten Ti6Al4V Probe in Fig. 2 dargestellt. Zu erkennen ist dort das für bekannte pulvermetallurgisch hergestellte und gesinterte Titanbauteile typische lamellare aus α-Phasen und β-Phasen gebildete Mischgefüge, das (α+β)-Gefüge, mit einer mittleren primären β-Phasenkorngröße (D) von ca. 190 *µ*m.

Die Herstellung von pulvermetallurgisch prozessierten Titan und Titanlegierungen mit kleinen Korngrößen ist in der US 4,601,874 [4] durch Marty et al. beschrieben. Durch das gezielte Beimengen von S, P, B, As, Se, Te, Y und Lanthanoide wird im Konsolidierungsprozess ein Material mit Korngrößen erzeugt, die zwei Größenordnungen geringer sind als die verwendeten Titanpulverpartikel. Nachteil dieses Ansatzes ist, dass der Einsatz von Titan und Titanlegierungen gerade in streng reglementieren Marktsegmenten verbreitet ist. Für diese Anwendungszwecke sind die chemischen Zusammensetzungen des Materials und dessen mechanische Eigenschaft durch Normen reglementiert. So sind beispielsweise in den Normen ASTM F2885 und ASTM F2889 die Materialzusammensetzungen und mechanischen Eigenschaften von Ti6Al4V bzw. Reintitan bestimmt.

In der WO 2012/148471 A1 [7] ist ein Verfahren für die pulvermetallurgische Herstellung von Bauteilen aus Titan oder Titanlegierungen beschrieben, bei dem Formkörper aus Metallpulver üblicher Partikelgröße hergestellt und mit bei üblichen Sintertemperaturen von 1100 °C und höher, insbesondere bei 1200°C, gesintert wird. Das dadurch erhaltene Gefüge mit vergleichsweise großen Körnern wird dann unter Wasserstoffatmosphäre abgekühlt, um eine Umwandlung der Kornstruktur zu erzielen.

Eine mit der Erfindung allgemein verfolgte Zielsetzung ist es nun, bei pulvermetallurgisch hergestellten und gesinterten Titanbauteilen eine Möglichkeit zu schaffen, das Gefüge zu manipulieren und die Materialeigenschaften zu optimieren. Insbesondere soll es ermöglicht werden, Materialeigenschaften direkt im Sinterprozess auf den spezifischen Anwendungsfall angepasst einstellen zu können und/oder im Sinterprozess einen optimalen Ausgangspunkt für weitere thermische Behandlungsschritte nach dem Sintern zu schaffen. So soll es z.B. möglich sein, gezielt durch Einstellung der Sinterbedingungen ein vorwiegend globulares Gefüge zu erzeugen, das eine hohe Duktilität aufweist.

Zur Lösung der Aufgabe wird ein Verfahren gemäß Patentanspruch 1 vorgeschlagen. Vorteilhafte Ausgestaltungen des Verfahrens sind in den Ansprüchen 2 bis 14 angegeben.

Eine entscheidende Voraussetzung für die Umsetzung des erfindungsgemäßen Verfahrens und für die Schaffung der Möglichkeit einer Einflussnahme auf die Materialeigenschaften im Sintervorgang ist die Verwendung von aus Titan oder Titanlegierungen gebildetem Metallpulver mit einer mittleren Partikelgröße < 25 *µ*m, sogenanntem Feinpulver. In solchem für das erfindungsgemäße Verfahren eingesetzten Feinpulver kann die maximale Partikelgröße insbesondere bei < 30 *µ*m liegen. Dabei wird von den Herstellern derartiger Feinpulver die maximale Partikelgröße als Grenzwert angeben. Gleichwohl kann noch immer ein geringer Anteil an Partikeln in einer solchen Charge Partikelgrößen oberhalb dieses Grenzwertes aufweisen. Ein solcher Anteil wird in der Regel mit maximal 1 bis maximal 5 Gewichts-% angegeben.

Die mittlere Partikelgröße kann mit Vorteil noch geringer liegen, insbesondere bei < 20 *µ*m, mit Vorteil < 10 *µ*m und besonders bevorzugt sogar < 5 *µ*m. Je geringer die Partikelgröße des Metallpulvers ist, desto eher lassen sich hohe Enddichten bereits bei gegenüber den bisher verwendeten vergleichsweise hohen Sintertemperaturen deutlich reduzierten Sintertemperaturen erreichen.

Die Messung der für die Erfindung wesentlichen Partikelgrößen und deren Verteilung erfolgt dabei über eine Partikelgrößenuntersuchung mittels Laserstrahlstreuung nach ASTM B822. Die Verteilung der Partikelgrößen bestimmt sich nach Gewichts-% und nach D10/D50/D90, wobei D50 die mittlere Partikelgröße bezeichnet. Konkret wurden die hier angegebenen Partikelgrößen in bei der Anmelderin durchgeführten Vergleichsversuchen durch Messung mit Partikelgrößen-Analysegeräten COULTER® LS des Herstellers Beckman Coulter und Auswertung unter Anwendung der Fraunhofer Theorie nach ASTM B822 bestimmt.

Die Partikelgröße im Sinne der Erfindung bestimmt sich bei sphärischen Partikeln durch den Partikeldurchmesser. Bei nichtsphärischen Partikeln entspricht die Partikelgröße der projizierten maximalen Partikeldimension.

Durch die verringerte Partikelgröße steigen im nicht konsolidierten Bauteil die zum Sintervorgang zur Verfügung stehende Oberfläche und damit auch die gespeicherte Oberflächenenergie an. Da die Reduktion dieser Energie die treibende Kraft im Sinterprozess darstellt, kann der Sintervorgang dann unter Einsatz von geringer thermischer Energie ablaufen.

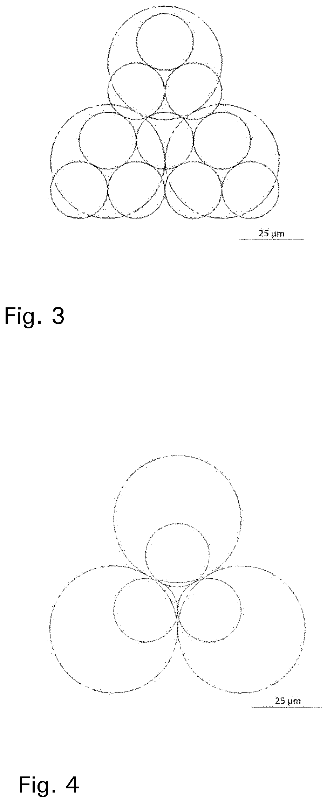

Ein weiterer Vorteil der Verwendung von wie vorstehend bezeichnet dimensionierten Feinpulvern für das Formen der Grünteile ist, dass pro Volumeneinheit mehr Pulverpartikel eingebracht werden können. Dies führt neben der vergrößerten Oberfläche zu einer höheren Anzahl an Kontaktpunkten der Partikel pro Volumeneinheit, wie dies in Fig. 3 veranschaulicht ist. Dort ist in einer schematischen Darstellung der Einfluss einer Halbierung der Partikelgröße (am Beispiel von sphärischen Partikeln) auf die Partikelanzahl zum Füllen eines definierten Volumens veranschaulicht.

Die Kontaktpunkte der Partikel sind ihrerseits Startpunkt und eine notwendige Bedingung für den Sinterprozess, welcher durch Diffusionsprozesse getrieben wird. Die Erhöhung der Anzahl solcher Kontaktpunkte pro Volumeneinheit schafft mithin eine Verbesserung der Startbedingungen für den Sinterprozess.

Durch die erfindungsgemäße Verwendung von Feinpulver mit mittleren Partikelgrößen < 25 *µ*m ergibt sich bei Betrachtung der idealen Packungsdichte neben den genannten Vorteilen zudem die Folge, dass das durch die Pulverpartikel eingeschlossene Volumen, wie in Fig. 4 idealisiert dargestellt ist, verringert wird. In Fig. 4 ist in einer schematischen Darstellung die Verkleinerung des Hohlraums zwischen aneinandergrenzenden Partikeln durch Halbierung der Partikelgröße (am Beispiel von sphärischen Partikeln) veranschaulicht. Da dieser Hohlraum zum Erreichen der für das nach dem Sintervorgang erhaltene Bauteil angestrebten - hohen - Materialdichte durch Materialtransport während des Sinterprozesses geschlossen werden muss, stellt ein geringeres zu überbrückendes Volumen einen weiteren entscheidenden Grund für eine Verbesserung des Verfahrensresultates dar.

Der Sinterschritt findet typischerweise in einer Atmosphäre mit verringertem Druck statt. Dies kann ein Vakuum mit einem Druck von ≤ 10⁻³ mbar, insbesondere ≤ 10⁻⁵ mbar, sein. Es kann aber auch eine Inertgasatmosphäre mit reduziertem Druck von z.B. ≤ 300 mbar sein. Als Inertgas kommt hier insbesondere Argon in Betracht.

Die Sintertemperaturen liegen erfindungsgemäß unterhalb von 1100°C. Sie können insbesondere bei maximal 1050°C, bei maximal 1000°C, sogar bei lediglich maximal 950°C liegen. Die Sintertemperatur sollte für das Erreichen eines guten Sinterergebnisses vorteilhafterweise jedoch nicht unterhalb von 860°C gewählt werden. Die Sintertemperatur kann dabei gleichmäßig beibehalten werden. Insbesondere ist es allerdings auch möglich und liegt im Sinne der Erfindung, die Temperatur während des Sintervorganges zu variieren. Als Sintertemperatur wird hier diejenige Temperatur bezeichnet, die das zu sinternde Werkstück erfahren hat. Je nach Sinteranlage wird in deren Steuerung eine angepasste Prozesstemperatur zu wählen sein, da es vorkommen kann, dass die an einer fern von dem Werkstück gemessene Prozesstemperatur sich von der durch das Werkstück erfahrenen Sintertemperatur unterscheidet.

Die Sinterdauer kann insbesondere bei ≤ 3,5 Stunden, vielfach auch bei ≤ 3 Stunden oder sogar bei ≤ 2,5 Stunden liegen. Dabei hat sich allerdings herausgestellt, dass in der Regel für das Erreichen guter Ergebnisse die Sinterdauer wenigstens 1 Stunde, vorzugsweise wenigstens 2 Stunden, betragen sollte.

Nach dem Sinterschritt weisen mit dem erfindungsgemäßen Verfahren hergestellte Bauteile aus Titan oder Titanlegierung in der Regel eine Enddichte von > 97% auf. Es können dabei auch Enddichten erreicht werden, die oberhalb von 98% liegen, ja sogar ≥99% betragen.

Zum Erzielen eines globularen Gefüges wurden die Titanbauteile unterhalb der β-Transus-Temperatur gesintert (z.B. bei einer Temperatur, die 30° C unterhalb der β-Transus-Temperatur lag).

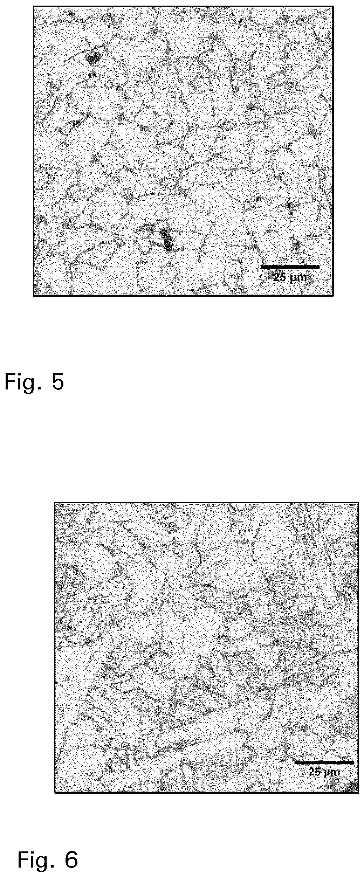

So wurden in ersten Versuchen bei einer unterhalb der der β-Transus-Temperatur liegenden Sintertemperatur von 950°C und mit einer Sinterdauer von unter drei Stunden Bauteile mit einer Enddichte von >97% hergestellt. Diese wiesen ein globulares Gefüge mit einer α-Korngröße von durchschnittlich 10,1 *µ*m und einer max. Größe von 29 *µ*m auf. Das Gefüge dieses Materials ist in Fig. 5 gezeigt. Diese Korngrößen liegen in der Größenordnung der verwendeten Pulverpartikel.

Die β-Transus-Temperatur von Ti6Al4V liegt nach der Literatur im Bereich von 985°C bis 1015°C [3; 5]. Diese vergleichsweise weite in der Literatur angegebene Spanne ist zum einen auf die Verteilung der Legierungselemente in den Titanlegierungen zurückzuführen. Zum anderen stellt der Umgebungsdruck einen weiteren Einflussfaktor dar. So beschreiben Huang et al., dass durch erhöhte Prozessdrücke (1500 bar) bei der Legierung Ti46Al8Nb eine Reduktion der α-Transus-Temperatur zu beobachten sei [6].

Die Erfinder gehen derzeit davon aus, dass, je nach Prozessbedingungen, durch Druckvariationen Verschiebungen der β-Transus-Temperatur von lediglich maximal 20°C zu beobachten sein werden.

Für das Erzeugen eines bimodalen Gefüges, wurden die Bauteile nahe der β-Transus-Temperatur gesintert, allerdings noch immer unterhalb derselben.

So sind, um auch das für viele Anwendungsfälle vorteilhafte lamellare Gefüge mit verkleinerter primären β-Phasen-Korngröße der Ti6Al4V Legierung herzustellen, erste Proben hergestellt worden, indem die Titanbauteile bei einer Sintertemperatur von 1000°Cgesintert worden sind (Fig. 6). Diese Sintertemperatur lag, wie Untersuchungen der erhaltenen Proben im Hinblick auf das in der gesinterten Legierung ausgebildete Gefüge gezeigt haben noch unterhalb der β-Transus-Temperatur, wenngleich auch nur geringfügig. Das sich einstellende bimodale Gefüge setzt sich zusammen aus globularem α-Gefüge und geringen Anteilen aus lamellaren (α+β)-Gefüge, wobei die mittlere β-Korngröße 81 *µ*m beträgt.

Die Messung der Dichte erfolgte gemäß Vorgaben der ASTM B962 und der ASTM B311. Die Bestimmung der Korngrößen wurde entsprechend den Bestimmungen der ASTM E112 vorgenommen.

Für das Erzeugen eines lamellaren Gefüges mit möglichst geringer Korngröße der primäre β-Phasen-Körner, wurden die Bauteile weitgehend, d.h. die überwiegende Zeit, unterhalb der β-Transus-Temperatur, dabei aber, mit einer minimalen Haltezeit, die unterhalb von 30 min lag, vorzugsweise unterhalb von 20 min blieb, insbesondere weniger als 10 min betrug, phasenweise auch oberhalb der β-Transus-Temperatur, gesintert, so dass vollständig die β-Phase vorliegt, um so gerade das lamellare Gefüge zu erzeugen, dabei aber das primäre β-Phasen-Korn den in Anspruch 16 genannten Größenbereich nicht überschreitet. Das Sintern oberhalb der β-Transus-Temperatur mit minimaler Haltezeit erfolgte dabei jedenfalls bei einer Temperatur oberhalb von 1015°C. Dabei wurde diese Temperatur in jedem Fall unterhalb von 1080°C gehalten, lag mit Vorteil unterhalb von 1040°C und war insbesondere ≤ 1020°C gewählt.

In den oben bezeichneten Möglichkeiten der Einflussnahme auf die Phasenzusammensetzung in dem gesinterten Material durch gezielte Einstellung der Sinterbedingungen bei Sintertemperaturen unterhalb von 1100°C, insbesondere überwiegend unterhalb der β-Transus-Temperatur, liegt gerade ein besonderer Vorteil des erfindungsgemäßen Vorgehens. Die Voraussetzung für diese Variabilität ist, dass ausreichend dichte Titanbauteile unterhalb der β-Transus-Temperatur hergestellt werden können, was, wie die Erfinder erkannt haben, aufgrund der erfindungswesentlichen Verwendung des Feinpulvers mit Partikelgrößen <30 *µ*m möglich wird.

Somit ist nachgewiesen, dass gemäß dem erfindungsgemäßen Verfahren pulvermetallurgische Formkörper aus Titan und Titanlegierungen unterhalb der üblicherweise jenseits der Marke von 1100°C, in der Regel bei 1200°C und darüber liegenden Sintertemperaturen, vorteilhafterweise unterhalb der β-Transus-Temperatur, gesintert und dabei Bauteile mit guten strukturellen und weitere Materialeigenschaften erhalten werden können. Dabei konnte gezeigt werden, dass bei im Vergleich zu den im Stand der Technik üblichen Sintertemperaturen deutlich niedriger eingestellten Sintertemperaturen - unerwartet - Bauteile mit hohen Enddichten von > 97% erhalten werden können. Insbesondere ist gezeigt worden, dass es das erfindungsgemäße Verfahren erlaubt, im Sinterprozess das Gefüge der Titanbauteile zu variieren und die Korngröße drastisch zu reduzieren, wodurch die mechanischen Eigenschaften der Bauteile, bspw. Zugfestigkeit, Duktilität und Dauerfestigkeit, optimiert werden können.

Im Rahmen der Erfindung kann z.B. auch eine besonders niedrige Temperatur für das Sintern gewählt werden, z.B. eine Temperatur von unter 950°C, und es kann, wenn bei einem solchen Sinterschritt die angestrebte Materialdichte im fertigen Bauteil (in der Regel > 97%) noch nicht erreicht ist, eine weitere Verdichtung des Materials in einem anschließend durchgeführten Pressschritt vorgenommen werden, in dem das Material mit Druck und gegebenenfalls einer Temperatur beaufschlagt wird, insbesondere durch ein Kaltisostatisches Pressen (Cold Isostatic Pressing, CIP) oder durch ein Heißisostatisches Pressen (Hot Isostatic Pressing, HIP). Hier kann z.B. die Materialdichte nach dem Sintern bei < 97% liegen und durch den nach dem Sintern durchgeführten Pressschritt auf > 97% verdichtet werden.

Des Weiteren können nach dem erfindungsgemäßen Verfahren hergestellte Bauteile im Nachgang zu dem Sinterschritt weiteren thermischen Nachbehandlungen unterzogen werden, um noch weiter auf die Eigenschaften des Materials Einfluss zu nehmen. Derartige weitere thermische Nachbehandlungen können z.B. ein oder mehrere der nachfolgenden Verfahren sein: Heißisostatisches Pressen (HIP), Abschrecken (Quench), gleichmäßiges Schnellabschrecken (Uniform Rapid Quench, URQ).

Durch die erfindungsgemäß gegenüber den aus den Stand der Technik verwendeten Sintertemperaturen verringerten Sintertemperaturen ergeben sich weitere ökologisch/ökonomische und prozesstechnische Vorteile. Zum einen wird im Sinterprozess weniger thermische Energie benötigt, was zu geringeren Kosten aber auch kürzeren Prozesszeiten führt. Zum anderen ermöglicht das erfindungsgemäß mit verringerter Sintertemperatur durchgeführte Verfahren die Verwendung von Heißwandofenkonzepten, die wiederum kostengünstiger sind als Öfen, die für Prozesstemperaturen > 1100°C ausgelegt sind und bei denen es sich klassischerweise um Kaltwandöfen handelt.

Die gezielte Kombination aus Feinpulvern mit mittlerer Partikelgröße < 25 *µ*m, dabei vorzugsweise zudem mit maximalen Partikelgrößen < 30*µ*m, und im Vergleich zum Stand der Technik reduzierten, als niedrig einzustufenden Sintertemperaturen ermöglicht die einzigartige Manipulation des Gefüges und damit der Materialeigenschaften.

In den vorstehend bereits in Bezug genommenen Figuren zeigen:
- Fig. 1: eine Darstellung eines lamellaren (α+β)-Gefüges einer Ti6Al4V Probe mit Beschreibung der Gefügeanteile nach Sieniawski et al. [3];
- Fig. 2: eine mikroskopisch vergrößerte Aufnahme einer unter Verwendung von Pulverpartikeln <45 *µ*m pulvermetallurgisch hergestellten und standard-gesinterten Ti6Al4V Probe und belegt für diese ein lamellares (α+β)-Gefüge;
- Fig. 3: eine schematische Darstellung des Einflusses der Halbierung der Partikelgröße (am Beispiel von sphärischen Partikeln) auf die Partikelanzahl zum Füllen eines definierten Volumens;
- Fig. 4: eine schematische Darstellung der Verkleinerung des Hohlraums zwischen aneinandergrenzenden Partikeln durch Halbierung der Partikelgröße (am Beispiel von sphärischen Partikeln);
- Fig. 5: eine mikroskopisch vergrößerte Schliffbildaufnahme einer unter Verwendung von Pulverpartikeln < 20 *µ*m pulvermetallurgisch hergestellten und gesinterten Ti6Al4V Probe, die die Ausbildung eines globular ausgeprägten α-Gefüges belegt; und
- Fig. 6: eine mikroskopisch vergrößerte Schliffbildaufnahme einer unter Verwendung von Pulverpartikeln < 20 *µ*m pulvermetallurgisch hergestellten und gesinterten Ti6Al4V Probe, die die Ausbildung eines bimodalen Gefüges mit globularem α-Gefüge und lamellar ausgeprägtem (α+β)-Gefüge belegt.

### Referenzen:

[1] R. Gerling, T. Ebel, T. Hartwig: *Verfahren zur Herstellung von Bauteilen durch Metallpulverspritzguss.* European Patent EP1119429B1, 2003.
[2] H.-J. Blüm: *Verfahren zum kombinierten Entbinden und Sintern von glaskeramischen, keramischen und metallischen Formteilen.* European Patent EP1496325A2, 2004.
[3] J. Sieniawski, W. Ziaja, K. Kubiak, M. Motyka: Microstructure and Mechanical Properties of High Strength Two-Phase Titanium Alloys. Materials Science / Metals and Nonmetals "Titanium Alloys - Advances in Properties Control", 2013, ISBN 978-953-51-1110-8.
[4] M. Marty, H. Octor, A. Walder: *Process for forming a titanium base alloy with small grain size by powder metallurgy.* United States Patent U.S. 4,601,874, 1986.
[5] J. Lindemann: Titanlegierungen, Übung Leichtbauwerkstoffe des Lehrstuhl Metallkunde und Werkstofftechnik Brandenburgische Technische Universität Cottbus, 2012.
[6] A. Huang, D. Hu, M.H. Loretto, J. Mei, X. Wu: The influence of pressure on solid-state transformations in Ti-46Al-8Nb. Scripta Materialia, Vol 56, Ausgabe 4, 2007, S. 253-324.
[7] FANG, Zhigang Zak, WANG, Hongtao, SUN, Pei: *Powder Metallurgy Methods for the Production of Fine and Ultrafine Grain Ti, and Ti Alloys.* Published International Patent Application WO 2012/148471 A1, 2012.

## Patentansprüche

1. Verfahren zur pulvermetallurgischen Herstellung eines Bauteils aus Titan oder einer Titanlegierung, wobei zunächst unter Verwendung von aus Titan oder der Titanlegierung gebildetem Metallpulver ein Grünteil geformt und dieses in einem nachfolgenden Sinterschritt verdichtet und verfestigt wird, **dadurch gekennzeichnet, dass** für die Herstellung des Grünteils Metallpulver aus Titan oder der Titanlegierung mit einer mittleren Partikelgröße < 25 *µ*m, gemessen mittels Laserstrahlstreuung nach ASTM B822, verwendet wird und dass der Sinterschritt bei einer Sintertemperatur bis max. 1100°C bei einer Sinterdauer von ≤ 5 Stunden in einer unter einem gegenüber dem Normaldruck reduzierten Druck stehenden Atmosphäre durchgeführt wird.

2. Verfahren nach Anspruch 1, **dadurch gekennzeichnet, dass** die maximale Partikelgröße des Metallpulvers aus Titan oder der Titanlegierung < 30 *µ*m beträgt.

3. Verfahren nach einem der vorhergehenden Ansprüche, **dadurch gekennzeichnet, dass** der Sinterschritt in einem Vakuum mit einem Druck ≤ 10⁻³ mbar, insbesondere bei einem Druck von ≤ 10⁻⁵ mbar durchgeführt wird.

4. Verfahren nach einem der Ansprüche 1 oder 2, **dadurch gekennzeichnet, dass** der Sinterschritt in einer Inertgasatmosphäre, insbesondere in einer Argonatmosphäre, bei einem Druck von ≤ 300 mbar durchgeführt wird.

5. Verfahren nach einem der vorhergehenden Ansprüche, **dadurch gekennzeichnet, dass** für die Herstellung des Grünteils Metallpulver aus Titan oder der Titanlegierung mit einer mittleren Partikelgröße < 20 *µ*m, insbesondere < 10 *µ*m, vorzugsweise < 5*µ*m, verwendet wird.

6. Verfahren nach einem der vorhergehenden Ansprüche, **dadurch gekennzeichnet, dass** die Sinterdauer ≤ 3,5 Stunden, insbesondere ≤ 3 Sunden, vorzugsweise ≤ 2,5 Stunden, beträgt.

7. Verfahren nach einem der vorhergehenden Ansprüche, **dadurch gekennzeichnet, dass** die Sinterdauer wenigstens 1 Stunde, vorzugsweise wenigstens 2 Stunden, beträgt.

8. Verfahren nach einem der vorhergehenden Ansprüche, **dadurch gekennzeichnet, dass** die Sintertemperatur bis maximal 1050°C, vorzugsweise bis maximal 1000°C, insbesondere bis maximal 950°C, beträgt.

9. Verfahren nach einem der vorhergehenden Ansprüche, **dadurch gekennzeichnet, dass** die Sintertemperatur wenigstens 860°C beträgt.

10. Verfahren nach einem der vorhergehenden Ansprüche, **dadurch gekennzeichnet, dass** in dem Sinterschritt die Sintertemperatur in einem unterhalb einer β-Transus-Temperatur des Titan- bzw. Titanlegierungsmaterials eingestellt wird.

11. Verfahren nach einem der vorhergehenden Ansprüche, **dadurch gekennzeichnet, dass** das Bauteil nach dem Sinterschritt eine Materialdichte von > 97%, insbesondere > 98%, vorzugsweise ≥ 99% aufweist.

12. Verfahren nach einem der Ansprüche 1 bis 11, **dadurch gekennzeichnet, dass** in dem Sinterschritt eine unterhalb von 950°C liegende Sintertemperatur gewählt wird und dass zum Erreichen einer Materialdichte des Bauteils von > 97% dieses nach dem Sinterschritt in einem weiteren Schritt mit Druck und gegebenenfalls einer Temperatur beaufschlagt wird, z.B. einem Schritt des Kaltisostatischen Pressens (CIP) und/oder des Heißisostatischen Pressens (HIP) unterzogen wird.

13. Verfahren nach einem der vorhergehenden Ansprüche, **dadurch gekennzeichnet, dass** das Bauteil im Anschluss an den Sinterschritt einer thermischen Nachbehandlung unterzogen wird.

14. Verfahren nach Anspruch 13, **dadurch gekennzeichnet, dass** die thermische Nachbehandlung in Form von eines oder mehrerer der folgenden Behandlungsverfahren durchgeführt ist: Heißisostatisches Pressen (HIP), Abschrecken (Quench), gleichmäßiges Schnellabschrecken (Uniform Rapid Quench, URQ).

## Claims

1. Process for the powder metallurgical production of a component from titanium or a titanium alloy, wherein a green part is first formed by using metal powder formed from titanium or the titanium alloy and this is then compacted and solidified in a subsequent sintering step, **characterized in that** for the production of the green part metal powder of titanium or the titanium alloy is used, with an average particle size <25 µm, as measured by laser beam scattering according to ASTM B822 and that the sintering step is performed at a sintering temperature up to max. 1100°C, at a sintering time <5 hours in an atmosphere with reduced pressure compared to the normal pressure.

2. The method according to claim 1, **characterized in that** the maximum particle size of the metal powder of titanium or titanium alloy is <30 microns.

3. The method according to one of the preceding claims, **characterized in that** the sintering step is carried out in a vacuum with a pressure ≤ 10⁻³ mbar, in particular at a pressure ≤ 10⁻⁵ mbars.

4. The method according to one of claims 1 or 2, **characterized in that** the sintering step is performed in an inert gas atmosphere, in particular in an argon atmosphere, at a pressure ≤ 300 mbars.

5. The method according to any one of the preceding claims, **characterized in that** for the production of the green part, metal powder of titanium or titanium alloy is used, having an average particle size <20µm, in particular <10µm, preferably <5µm.

6. Method according to one of the preceding claims, **characterized in that** the sintering time is ≤ 3.5 hours, in particular ≤ 3 hours, preferably ≤ 2.5 hours.

7. The method according to one of the preceding claims, **characterized in that** the sintering time is at least 1 hour, preferably at least 2 hours.

8. The method according to one of the preceding claims, **characterized in that** the sintering temperature is maximum 1050°C, preferably maximum 1000°C, in particular maximum 950°C.

9. The method according to one of the preceding claims, **characterized in that** the sintering temperature is at least 860°C.

10. The method according to one of the preceding claims, **characterized in that** in the sintering step, the sintering temperature is adjusted at a temperature below a β-transus temperature of the titanium or titanium alloy material..

11. The method according to one of the preceding claims, **characterized in that** the component after the sintering step has a material density > 97%, in particular > 98%, preferably > 99%.

12. The method according to one of claims 1 to 11, **characterized in that** in the sintering step, a sintering temperature below 950°C is selected and that to achieve a material density of the component > 97%, said component is subjected in a further step to pressure and optionally to a temperature, for example a step of cold isostatic pressing (CIP) and/or hot isostatic pressing (HIP).

13. The method according to one of the preceding claims, **characterized in that** the component is subjected to a subsequent thermal treatment after the sintering step.

14. The method according to claim 13, **characterized in that** the thermal post-treatment is carried out in the form of one or more of the following treatment methods: hot isostatic pressing (HIP), quenching, uniform rapid quenching (URQ).

## Revendications

1. Procédé pour la production métallurgique en poudre d'un composant à partir de titane ou d'un alliage de titane, dans lequel une partie verte est d'abord constituée en utilisant une poudre de métal formée à partir de titane ou d'alliage de titane et celui-ci est ensuite compacté et solidifié dans une étape ultérieure de frittage, **caractérisé en ce que**, pour la production de la partie verte, on utilise de la poudre métallique de titane ou d'alliage de titane, avec une granulométrie moyenne < 25 µm, mesurée par diffusion de faisceau laser selon la norme ASTM B822 et que l'étape de frittage est effectuée à une température de frittage allant jusqu'à max. 1100°C, à un temps de frittage < 5 heures dans une atmosphère à pression réduite par rapport à la pression normale.

2. Procédé selon la revendication 1, **caractérisé en ce que** la taille maximale des particules de la poudre métallique de titane ou d'alliage de titane est < 30 microns.

3. Procédé selon l'une quelconque des revendications précédentes, **caractérisé en ce que** l'étape de frittage est effectuée dans un vide avec une pression ≤ 10⁻³ mbars, en particulier à une pression ≤ 10⁻⁵ mbars.

4. Procédé selon l'une des revendications 1 ou 2, **caractérisé en ce que** l'étape de frittage est effectuée dans une atmosphère de gaz inerte, en particulier dans une atmosphère d'argon, à une pression ≤ 300 mbars.

5. Procédé selon l'une quelconque des revendications précédentes, **caractérisé en ce que** pour la production de la partie verte, on utilise de la poudre métallique de titane ou d'alliage de titane, d'une taille moyenne de particules < 20 µm, en particulier < 10 µm, de préférence < 5 µm.

6. Procédé selon l'une des revendications précédentes, **caractérisé en ce que** le temps de frittage est ≤ 3,5 heures, en particulier ≤ 3 heures, de préférence ≤ 2,5 heures.

7. Procédé selon l'une des revendications précédentes, **caractérisé en ce que** le temps de frittage est d'au moins 1 heure, de préférence au moins de 2 heures.

8. Procédé selon l'une quelconque des revendications précédentes, **caractérisé en ce que** la température de frittage est au maximum de 1050°C, de préférence maximale 1000°C, en particulier au maximum 950°C.

9. Procédé selon l'une des revendications précédentes, **caractérisé en ce que** la température de frittage est d'au moins 860°C.

10. Procédé selon l'une quelconque des revendications précédentes, **caractérisé en ce que** dans l'étape de frittage, la température de frittage est ajustée à une température inférieure à une température β-transus de titane ou d'alliage de titane.

11. Procédé selon l'une quelconque des revendications précédentes, **caractérisé en ce que** le composant après l'étape de frittage a une densité de matériau> 97%, en particulier > 98%, de préférence > 99%.

12. Procédé selon l'une quelconque des revendications 1 à 11, **caractérisé en ce que** dans l'étape de frittage, on choisit une température de frittage inférieure à 950°C pour obtenir une densité de matériau du composant > 97%, ledit composant est soumis dans une étape ultérieure à une pression et éventuellement à une température, par exemple une étape de pressage isostatique à froid (CIP) et/ou de pressage isostatique à chaud (HIP).

13. Procédé selon l'une quelconque des revendications précédentes, **caractérisé en ce que** le composant est soumis à un traitement thermique ultérieur après l'étape de frittage.

14. Procédé selon la revendication 13, **caractérisé en ce que** le post-traitement thermique est réalisé sous la forme d'un ou plusieurs des procédés de traitement suivants: pressage isostatique à chaud (HIP - hot isostatic pressing), trempe, trempe rapide uniforme (URQ - uniform rapid quenching).
